Europäisches Patentamt

European Patent Office

Office européen des brevets

(11) Numéro de publication : **0 042 320**
**B1**

(12) **FASCICULE DE BREVET EUROPÉEN**

(45) Date de publication du fascicule du brevet :
28.12.83

(21) Numéro de dépôt : **81400882.7**

(22) Date de dépôt : **03.06.81**

(51) Int. Cl.³ : **F 01 D 25/18**

(54) **Palier inter-arbres de turbomachine multi-corps à amortissement par pellicule d'huile.**

(30) Priorité : **13.06.80 FR 8013116**

(43) Date de publication de la demande :
**23.12.81 Bulletin 81/51**

(45) Mention de la délivrance du brevet :
**28.12.83 Bulletin 83/52**

(84) Etats contractants désignés :
**DE FR GB**

(56) Documents cités :
**FR-A- 2 001 380**

(73) Titulaire : **SOCIETE NATIONALE D'ETUDE ET DE CONSTRUCTION DE MOTEURS D'AVIATION, "S.N.E.C.M.A."
2, Boulevard Victor
F-75015 Paris (FR)**

(72) Inventeur : **Cattaneo, Christian Jean
34, rue de Soignolles
Lissy F-77550 Moissy Cramayel (FR)**
Inventeur : **Charbonnel, Jean Louis
32, rue du Parc
F-77350 Le Mée Sur Seine (FR)**
Inventeur : **Lagrange, Jean-Paul
9, rue des Grands Prés
F-77820 Le Chatelet En Brie (FR)**
Inventeur : **Mazeaud, Georges
Les rives de l'Yerres Bâtiment 3
F-91330 Yerres (FR)**

(74) Mandataire : **Moinat, François et al
S.N.E.C.M.A. Service des Brevets Boîte Postale 81
F-91003 Evry Cedex (FR)**

Jouve, 18, rue St-Denis, 75001 Paris, France

Palier inter-arbres de turbomachine multi-corps à amortissement par pellicule d'huile

La présente invention concerne un palier inter-arbres de turbomachine multi-corps comportant une disposition d'amortissement des vibrations par pellicule d'huile.

Les turbomachines multi-corps comportent un palier qui supporte en rotation un premier arbre par rapport à un second arbre et qui comprend de manière générale un roulement à rouleaux insérés entre une bague intérieure montée sur le premier arbre et une bague extérieure contenue dans un boîtier lui-même monté sur le second arbre. Ce palier comprend également un écrou de serrage maintenant la bague intérieure sur l'arbre. De manière plus précise, le premier arbre est constitué par le tourillon de la ligne d'arbre du corps haute-pression et le second arbre est constitué par le tourillon de la ligne d'arbre du corps basse-pression. De manière courante, pour obtenir un fonctionnement satisfaisant d'un palier de ce type, deux fonctions doivent être réalisées : d'une part, le graissage et le refroidissement du roulement et, d'autre part, l'amortissement des vibrations normales des arbres et du roulement.

Le brevet FR-A-2 208 050 déposé le 23 novembre 1973 donne une illustration des solutions apportées, dans le cas d'un palier supportant un arbre rotatif par rapport à une structure fixe, pour répondre à ces exigences de fonctionnement. Ainsi, comme décrit par ce brevet, l'écrou de serrage comporte sur sa face interne un logement annulaire alimenté en huile qui est ensuite distribuée sur la bague intérieure pour assurer le graissage et le refroidissement du roulement. En quittant le roulement, l'huile arrive sur la bague extérieure, dans un espace aménagé entre la bague extérieure et le boîtier du roulement où la pellicule d'huile sous pression ainsi formée amortit les vibrations.

Un autre brevet FR-A-1 384 980 déposé le 8 janvier 1964 envisage le cas d'un palier inter-arbres pour lequel, à partir d'une arrivée commune, l'huile est distribuée d'une part vers les billes du roulement pour le graissage et d'autre part à travers une chambre annulaire vers des gorges, prévues dans la bague extérieure, pour son refroidissement. La totalité de l'huile est ensuite envoyée, par un circuit commun de retour, vers le recyclage.

Ces solutions antérieures ne donnent pas toutefois entière satisfaction. La dépendance par exemple entre l'alimentation sous pression de la pellicule d'huile d'amortissement et le circuit de graissage du roulement ne permet pas d'ajuster les débits nécessaires pour chaque fonction et rend difficile l'obtention d'un amortissement constant lié à un débit et à une pression déterminés de l'huile alimentant la pellicule formée entre la bague extérieure et le boîtier du roulement. On notera que la qualité des résultats obtenus est particulièrement importante pour l'application aux turbomachines multi-corps, par suite du niveau élevé des performances demandées et des conditions sévères de l'utilisation.

L'invention a ainsi pour objet un palier inter-arbres de turbomachine multi-corps dont la réalisation permet de remplir les fonctions de graissage et de refroidissement du roulement, d'une part, et d'amortissement des vibrations par pellicule d'huile sous pression, d'autre part, sans présenter les limitations et les inconvénients des solutions connues qui ont été analysées ci-dessus.

Ce palier de turbomachine multi-corps, conforme à l'invention, est du type supportant en rotation un premier arbre par rapport à un second arbre. Le premier arbre est constitué par le tourillon de la ligne d'arbre du corps haute-pression et le second arbre est constitué par le tourillon de la ligne d'arbre du corps basse-pression. Le palier comprend un roulement à rouleaux insérés entre une bague intérieure montée sur le premier arbre et une bague extérieure contenue dans un boîtier lui-même monté sur le second arbre. Le palier comprend également un écrou de serrage maintenant la bague intérieure sur l'arbre : cet écrou comporte sur sa face interne un logement annulaire alimenté en huile par effet centrifuge à partir d'une arrivée située sur le second arbre. Dans ce palier, à partir dudit logement de l'écrou, l'huile est distribuée d'une part sur la face interne de la bague intérieure vers les rouleaux pour assurer le graissage et le refroidissement du roulement et d'autre part vers la bague extérieure. Dans ce palier également, un jeu radial ménagé entre la bague extérieure et le boîtier du roulement constitue un espace où est introduit une pellicule d'huile sous pression pour assurer l'amortissement des vibrations produites sur le second arbre. Dans ce palier enfin, la totalité de l'huile distribuée effectue un retour vers le recyclage, par l'extérieur du boîtier de roulement. Ce palier se caractérise en ce que :

— le logement de l'écrou, constituant une première enceinte, comporte des moyens assurant la répartition précise des débits d'huile distribués d'une part sur la bague intérieure et d'autre part sur la bague extérieure ;

— le boîtier de la bague extérieure comporte un collecteur annulaire, constituant une seconde enceinte entraînée en rotation par le second arbre et recevant l'huile centrifugée à partir de la première enceinte constituée par le logement de l'écrou et entraînée en rotation à une vitesse différente par le premier arbre, ledit collecteur alimentant en huile sous pression la pellicule formée dans l'espace ménagé entre la bague extérieure et le boîtier et ayant une hauteur radiale déterminée de manière à obtenir la pression et le débit d'huile de la pellicule satisfaisants ;

— ledit retour de l'huile s'effectue à chaque extrêmité du boîtier de roulement, par un circuit amont et un circuit aval comportant des moyens internes pour assurer l'équilibrage des débits et des pressions de l'huile dans l'un et l'autre circuit, de façon à conserver un centrage correct du roulement ;

— les arbres comportent des moyens de centrage destinés lors du montage du roulement à les guider l'un dans l'autre sans que le jeu radial ménagé entre la bague extérieure et le boîtier n'amène entre les arbres de contact dommageable.

Avantageusement, les moyens de répartition précise des débits d'huile distribués à partir du logement de l'écrou sont constitués par des ailettes de cloisonnement disposées de façon à diviser ce logement en deux séries de secteurs, la première série de secteurs comportant des trous radiaux par lesquels est distribuée l'huile alimentant par centrifugation le collecteur annulaire du boîtier de roulement, la deuxième série de secteurs comportant des trous axiaux par lesquels est distribuée l'huile, à travers des rainures longitudinales et des perçages radiaux de la bague intérieure, sur la piste interne du roulement, lesdits trous radiaux et trous axiaux de l'écrou étant calibrés de manière à ajuster avec précision cette répartition des débits d'huile.

Avantageusement, le collecteur annulaire du boîtier de la bague extérieure du roulement comporte des ailettes disposées sur une face latérale de ce collecteur de manière à stabiliser l'anneau d'huile à l'intérieur du collecteur et à régulariser l'alimentation de la pellicule d'huile formée entre la bague et le boîtier ; de plus, le boîtier comporte un nombre déterminé de perçages calibrés longitudinaux débouchant dans une gorge annulaire et par lesquels est distribuée l'huile à partir du collecteur, de manière à ajuster avec précision la pression d'huile de la pellicule.

Avantageusement aussi, les moyens internes assurant l'équilibrage des débits et des pressions de l'huile entre le circuit amont et le circuit aval de retour de part et d'autre de la bague extérieure sont constitués par un joint souple placé entre ladite bague et le boîtier à l'entrée du circuit amont de manière à créer une réserve d'huile et à occasionner du côté amont des pertes de charge équivalant à celles qui sont occasionnées côté aval par un redan, afin d'éviter un déséquilibre des charges axiales sur la bague extérieure et de conserver le centrage correct du roulement.

Avantageusement, les moyens de centrage des arbres lors du montage sont constitués par des cannelures taillées dans un becquet du tourillon basse-pression et des cannelures taillées dans une zone associée du tourillon haute-pression.

D'autres caractéristiques et avantages de l'invention seront mieux compris à la lecture de la description qui va suivre d'un mode de réalisation et en se référant aux dessins annexés sur lesquels :

la figure 1 est une vue en coupe axiale de la partie d'une turbomachine multi-corps comportant le palier inter-arbres suivant l'invention,

la figure 2 est une vue partielle en coupe suivant la ligne 2-2 du palier représenté à la figure 1.

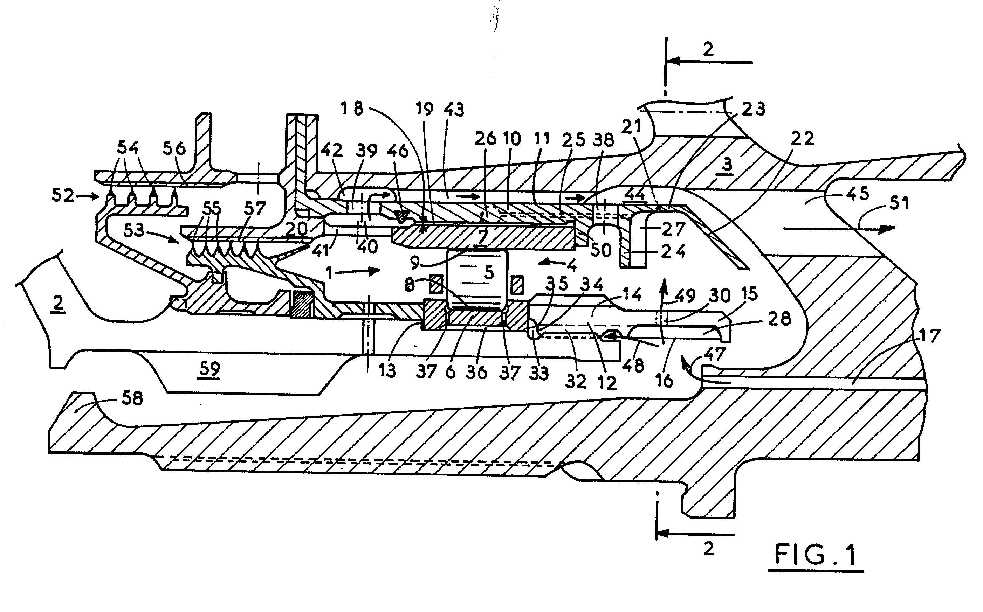

A la figure 1, on a représenté en coupe un palier selon l'invention, désigné par la référence générale 1, d'une turbomachine multi-corps, disposé entre un premier arbre 2 qui est le tourillon de la ligne d'arbre du corps haute-pression et un second arbre 3 qui est le tourillon de la ligne d'arbre du corps basse-pression. Le palier 1 comprend un roulement 4 dont les rouleaux 5 sont insérés entre une bague intérieure 6 et une bague extérieure 7, et roulent sur une piste interne 8 et une piste externe 9. La bague intérieure 6 est montée sur le premier arbre 2. La bague extérieure 7 est contenue par un boîtier 10 qui est monté dans un alésage 11 du second arbre 3. La bague intérieure 6 est fixée à l'arbre 2 par un écrou de serrage 12 qui la bloque contre un épaulement 13 de l'arbre. Cet écrou 12 a une partie 14 qui est assemblée par filetage sur l'arbre et une partie 15 qui est dégagée de l'arbre. Cette partie 15 comporte sur sa face interne un logement annulaire 16. Au droit de ce logement 16 du côté intérieur, débouchent des perçages longitudinaux 17 traversant la partie située à ce niveau du second arbre basse-pression 3. Entre la bague extérieure 7 et le boîtier de roulement 10 est ménagé un jeu radial 18 qui constitue un espace annulaire 19. La bague extérieure 7 est maintenue dans le boîtier 10 par une bague anti-rotation 20.

Dans la réalisation d'un palier selon l'invention dont un exemple est représenté, le boîtier de roulement 10 comporte, au droit du logement 16 de l'écrou 12 du côté extérieur par rapport à cet écrou, un collecteur annulaire 21 qui présente dans l'exemple choisi une face latérale 22 de forme tronconique située du côté opposé au roulement et réunie par un fond 23 à une face latérale 24 de forme cylindrique située du côté voisin du roulement, en harmonie avec la définition géométrique générale de l'ensemble. Sur la face 24 à proximité du fond 23 partent des trous longitudinaux 25 percés dans le boîtier 10 débouchant dans une gorge annulaire 26 qui s'ouvre dans l'espace 19, entre le boîtier 10 et la bague extérieure 7. Sur cette face 24 sont disposées, régulièrement réparties, des ailettes 27 de retenue d'huile.

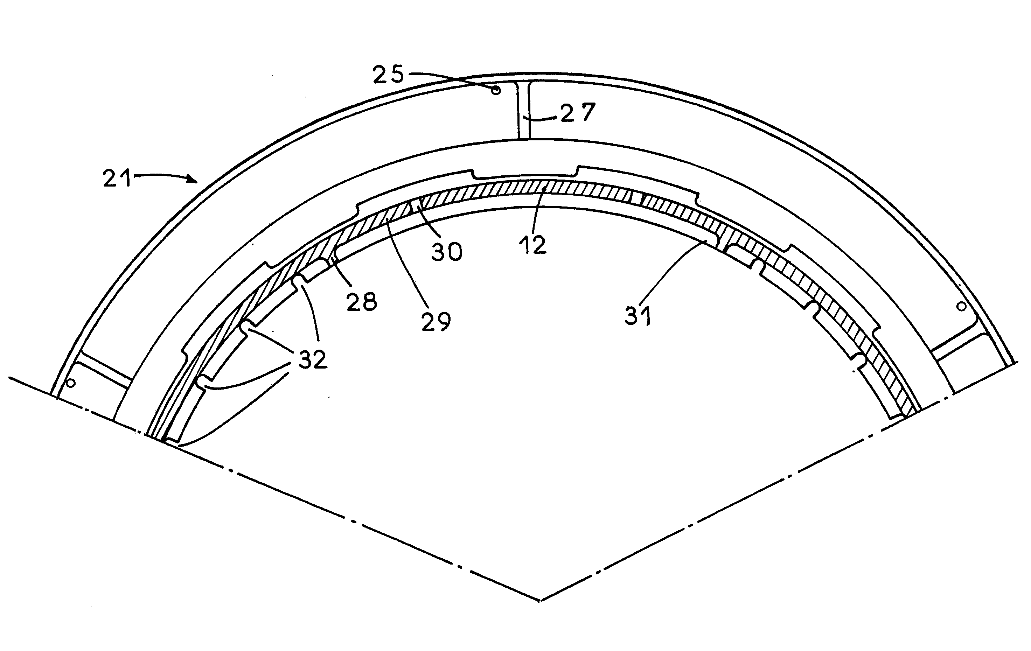

Conformément à l'invention, le palier 1 comporte également des moyens de répartition de l'huile sortant du logement 16 de l'écrou 12. Ces moyens sont constitués par des ailettes de cloisonnement 28 divisant ce logement en deux séries de secteurs. La vue partielle représentée à la figure 2 en coupe suivant la ligne 2-2 de la figure 1 précise cette disposition. Une première série de secteurs tels que 29 comporte des trous radiaux 30 et la deuxième série de secteurs tels que 31 comporte des trous axiaux 32 qui débouchent dans une cavité annulaire 33 ménagée à l'extrémité de l'écrou 12, du côté interne, entre la face 34 de cet écrou et la face 35 de la bague intérieure 6. De cette cavité 33 partent des rainures longitudinales 36 usinées dans la bague intérieure 6, communiquant avec des perçages radiaux 37 débouchant sur la piste interne 8 du roulement.

Conformément à l'invention, le palier 1 comporte encore sur le boîtier de roulement 10 des perçages radiaux 38 à l'extrémité où est placé le collecteur annulaire 20, et à l'autre extrémité des perçages radiaux 39, en communication d'une part à travers un espace annulaire 40 ménagé entre le boîtier 10 et la bague anti-rotation 20 avec des perçages radiaux 41 de cette bague 20 et d'autre part avec une cavité annulaire 42 ménagée entre le boîtier 10 et le second arbre 3. De cette cavité 42 partent des rainures longitudinales 43 usinées dans cet arbre 3 et débouchant, de même que les perçages 38, dans un espace 44 d'où partent des passages 45 traversant l'arbre 3. Un joint souple 46 est placé entre la bague extérieure 7 et le boîtier de roulement 10 à l'entrée de l'espace annulaire 40.

Le fonctionnement du palier selon l'invention permet de préciser les caractéristiques ressortant de la description qui en a été donnée et de relever les avantages obtenus.

L'huile arrive par les perçages 17 du second arbre 3 qui est le tourillon basse-pression. Par effet centrifuge, cette huile passe suivant la flèche 47 dans le logement annulaire 16 de l'écrou 12. Elle est à cet endroit répartie suivant deux circuits séparés :

— d'une part, suivant la flèche 48 et par les trous axiaux 32 de l'écrou, un premier circuit alimente en huile la cavité 33, les rainures longitudinales 36 et les perçages radiaux 37 de la bague intérieure 6, cette huile étant acheminée par effet centrifuge le long des faces des rouleaux 5 puis sur la piste externe 9 du roulement jusqu'aux sorties constituées par les perçages radiaux 38 et 41 de part et d'autre de la bague extérieure, assurant ainsi le graissage et le refroidissement du roulement ;

— d'autre part, suivant la flèche 49 et par les trous radiaux 30 de l'écrou un second circuit alimente par effet centrifuge le collecteur annulaire 21 du boîtier de roulement 10.

L'huile arrivant dans le collecteur annulaire 21 est stabilisée par les ailettes 27 de manière à être acheminée sous pression à travers les trous longitidinaux 25 du boîtier 10 dans l'espace 19 constitué entre la bague extérieure 7 et le boîtier 10. La pellicule d'huile sous pression ainsi formée dans l'espace 19 assure l'amortissement des vibrations normales du roulement 4 et des arbres 2 et 3.

A chaque extrêmité de la bague extérieure 7, l'huile acheminée dans l'espace 19 se mêle à l'huile qui a suivi le circuit de graissage et de refroidissement du roulement pour passer dans les sorties constituées par les perçages radiaux 38 et 41. Côté amont et côté aval, ce circuit d'huile subit des pertes de charge provoquées à une extrémité de la bague 7 par un redan 50 et à l'autre extrémité par le joint souple 46. Cette disposition assure l'équilibrage des débits et des pressions d'huile de part et d'autre et permet ainsi de conserver un centrage correct de la bague extérieure 7 du roulement, en évitant un déséquilibre des charges axiales sur ladite bague.

A travers les perçages radiaux 41 de la bague 20, puis les perçages radiaux 39 du boîtier 10 et les rainures longitudinales 43 du second arbre 3 ainsi qu'à travers les perçages radiaux 38 du boîtier 10, l'huile parvient dans l'espace 44 et est ensuite acheminée vers le recyclage général par les passages 45 de l'arbre 3, suivant la flèche 51.

La répartition de l'huile en deux circuits séparés assurant l'un, le graissage et le refroidissement du roulement et l'autre, l'amortissement des vibrations normales du roulement et des arbres, présente l'avantage d'éviter qu'une défaillance d'un circuit n'entraîne celle de l'autre et par exemple qu'une pollution du circuit de graissage n'entraîne aussi un colmatage des trous alimentant la pellicule d'huile sous pression pour l'amortissement.

La régularité et la précision de la répartition des débits d'huile entre les deux circuits ainsi constitués sont obtenues de manière avantageuse par la disposition des ailettes de cloisonnement 28 dans le logement 16 de l'écrou 12 et par le calibrage des trous radiaux 30 et des trous axiaux 32.

Le niveau de pression de l'huile de la pellicule formée pour l'amortissement entre la bague 7 et le boîtier 10 est déterminé par la hauteur radiale donnée au collecteur annulaire 21. Ce niveau de pression peut être ajusté au cours d'essais par un simple changement du boîtier 10, en faisant varier le diamètre ou le nombre des trous 25.

L'action des ailettes de stabilisation 27 du collecteur annulaire 21 est importante. En effet, la demanderesse a constaté lors d'essais de fonctionnement de paliers du type décrit, que l'huile en contact avec de l'air en rotation se mettait en rotation même dans une enceinte fixe. Une rotation de l'anneau d'huile par rapport au collecteur dans le cas présent pourrait créer des turbulences s'opposant à l'entrée de l'huile dans les trous d'alimentation. Ces perturbations dans la circulation normale de l'huile entraînent un gavage du palier, un glissement des éléments de roulement et de là une usure rapide de la bague. La disposition introduite par l'invention évite ces inconvénients.

On notera qu'en appliquant une disposition connue d'amortissement des vibrations par une pellicule d'huile sous pression, un effet maximal est de plus recherché dans la réalisation du palier selon l'invention. Cet objectif a en effet conduit à adopter deux dispositions :

— d'une part, la pellicule d'huile est formée dans un espace constitué entre la bague extérieure 7 et le boîtier de roulement 10, de manière à ce que l'effet d'amortissement s'exerce sur un diamètre important, l'efficacité de cet effet croissant dans le même sens que le diamètre sur lequel il est appliqué,

— d'autre part, cet effet s'exerce également sur une longueur importante donnée à la bague extérieure 7 du roulement 4, améliorant encore

cette efficacité de l'amortissement correspondant à l'augmentation de la longueur sur laquelle il est appliqué.

L'application de l'invention telle qu'un exemple de réalisation en est donné à titre explicatif et nullement limitatif en référence aux figures 1 et 2 conduit à apporter une disposition complémentaire, nécessaire pour réaliser dans de bonnes conditions le montage des corps haute-pression et basse-pression de la turbomachine.

En effet, on observe dans ce cas que diverses considérations de technologie et de fonctionnement de l'ensemble de la machine amènent à disposer sur les tourillons d'une part, des labyrinthes d'étanchéité tels que 52 et 53 comportant des léchettes 54 ou 55 et d'autre part, des zones associées revêtues d'une couche d'usure telles que 56 et 57. Lors du montage de l'ensemble, la présence du jeu radial 18 risque de provoquer un basculement du tourillon qui peut entraîner un endommagement des léchettes 54 ou 55 tant que les rouleaux 5 ne sont pas en place et que les léchettes 54 ou 55 ne sont pas engagées au niveau des zones associées 56 et 57.

Afin d'éviter ces inconvénients, les arbres 2 et 3 du palier 1 comportent selon l'invention, des moyens de centrage qui empêchent tout contact dommageable des labyrinthes 52 et 53 lors du montage. Ces moyens sont constitués d'une part sur le tourillon basse-pression 3 d'un becquet 58 dans lequel sont taillées des cannelures et d'autre part sur le tourillon haute-pression 2 d'une zone associée 59 comportant également des cannelures qui permettent l'assemblage des deux pièces.

Par l'ensemble de ces dispositions, le palier réalisé conformément à l'invention permet d'une part d'assurer un graissage et un refroidissement suffisants du roulement 4 et d'autre part d'obtenir un amortissement constant des vibrations du roulement 4 et des arbres 2 et 3 grâce à une pellicule d'huile dont le niveau de pression et le débit sont adaptés aux conditions de fonctionnement du palier, tout en évitant divers ennuis de fonctionnement liés à la circulation d'huile et en apportant une solution aux difficultés de montage de l'ensemble.

**Revendications**

1. Palier de turbomachine multi-corps du type supportant en rotation un premier arbre (2) constitué par le tourillon de la ligne d'arbre du corps haute-pression par rapport à un second arbre (3) constitué par le tourillon de la ligne d'arbre du corps basse-pression et comprenant un roulement (4) à rouleaux (5) insérés entre une bague intérieure (6) montée sur le premier arbre (2) et une bague extérieure (7) contenue dans un boîtier (10) lui-même monté sur le second arbre (3), et un écrou de serrage (12) maintenant la bague intérieure (6) sur l'arbre (2), cet écrou (12) comportant sur sa face interne un logement annulaire (16) alimenté en huile par effet centrifuge à partir d'une arrivée (17) située sur le second arbre (3), dans lequel à partir du logement (16) de l'écrou (12) l'huile est distribuée d'une part sur la piste interne (8) du roulement (4) vers les rouleaux (5) pour assurer le graissage et le refroidissement du roulement et d'autre part vers la bague extérieure (7), dans lequel un jeu radial (18) ménagé entre la bague extérieure (7) et le boîtier du roulement (10) constitue un espace (19) où est introduite une pellicule d'huile sous pression pour assurer l'amortissement des vibrations produites sur le second arbre (3) et dans lequel la totalité de l'huile distribuée effectue un retour vers le recyclage par l'extérieur du boîtier de roulement (10), caractérisé en ce que ;

— le logement (16) de l'écrou (12) constitue une première enceinte qui comporte des moyens assurant la répartition précise des débits d'huile distribués d'une part sur la bague intérieure et d'autre part sur la bague extérieure,

— le boîtier (10) de la bague extérieure (7) comporte un collecteur annulaire (21) qui constitue une seconde enceinte entraînée en rotation par le second arbre (3) et recevant l'huile centrifugée à partir du logement (16) de l'écrou (12) constituant la première enceinte entraînée en rotation à une vitesse différente par le premier arbre (2), ledit collecteur (21) alimentant en huile sous pression la pellicule formée dans l'espace (19) ménagé entre la bague extérieure (7) et le boîtier (10) et ayant une hauteur radiale déterminée de manière à obtenir la pression et le débit d'huile de la pellicule satisfaisants,

— ledit retour de l'huile s'effectue, à chaque extrémité du boîtier de roulement (10), par un circuit amont (42) et un circuit aval (44) comportant des moyens internes pour assurer l'équilibrage des débits et des pressions de l'huile dans l'un et l'autre circuit, de façon à conserver un centrage correct du roulement,

— les arbres (2) et (3) comportent des moyens de centrage destinés lors du montage du roulement (4) à guider les arbres (2) et (3) l'un dans l'autre sans que le jeu radial (18) ménagé entre la bague extérieure (7) et le boîtier (10) n'amène entre les arbres de contact dommageable.

2. Palier inter-arbres de turbomachine multicorps selon la revendication 1, caractérisé en ce que les moyens de répartition précise des débits d'huile distribués à partir du logement (16) de l'écrou (12) sont constitués par des ailettes de cloisonnement (28) disposées de façon à diviser ce logement (16) de l'écrou (12) en deux séries de secteurs (29, 31), la première série de secteurs (29) comportant des trous radiaux (30) par lesquels est distribuée l'huile alimentant par centrifugation le collecteur annulaire (21) du boîtier de roulement (10), la deuxième série de secteurs (31) comportant des trous axiaux (32) par lesquels est distribuée l'huile par des rainures longitudinales (36) et des perçages radiaux (37) de la bague intérieure (6) sur la piste interne (8) du roulement (4), lesdits trous radiaux (30) et trous axiaux (32) de l'écrou (12) étant calibrés de manière à ajuster avec précision cette répartition des débits d'huile.

3. Palier inter-arbres de turbomachine multi-corps selon l'une quelconque des revendications 1 et 2 caractérisé en ce que le collecteur annulaire (21) du boîtier (10) de la bague extérieure (7) du roulement (4) comporte des ailettes (27) qui sont disposées sur une face latérale (24) de ce collecteur (21) de manière à stabiliser l'anneau d'huile à l'intérieur du collecteur et à régulariser l'alimentation de la pellicule d'huile constituée entre la bague (7) et le boîtier (10) et en ce que le boîtier (10) comporte un nombre déterminé de perçages calibrés longitudinaux (25) par lesquels est distribuée l'huile à partir du collecteur (21), de manière à ajuster avec précision la pression d'huile de la pellicule.

4. Palier inter-arbres de turbomachine multi-corps selon l'une quelconque des revendications 1, 2 et 3 caractérisé en ce que les moyens internes assurant l'équilibrage des débits et des pressions de l'huile entre le circuit amont et le circuit aval de retour de part et d'autre de la bague (7) sont constitués par un joint souple (46) placé entre la bague (7) et le boîtier (10) à l'entrée du circuit amont de manière à créer une réserve d'huile et à occasionner du côté amont des pertes de charge équivalant à celles qui sont occasionnées côté aval par un redan (50) afin d'éviter un déséquilibre des charges axiales sur la bague (7) et de conserver le centrage correct du roulement (4).

5. Palier inter-arbres de turbomachine multi-corps selon l'une quelconque des revendications 1 à 4 caractérisé en ce que les moyens de centrage des arbres (2) et (3) sont constitués par des cannelures taillées dans un becquet (58) du tourillon basse-pression (3) et des cannelures taillées dans une zone associée (59) du tourillon haute-pression (2).

## Claims

1. A multi-spool turbomachine bearing of the type rotatably supporting a first shaft (2) constituted by the journal of the shaft line of the high-pressure spool with respect to a second shaft (3) constituted by the journal of the shaft line of the low pressure spool and comprising a roller assembly (4) with rollers (5) inserted between an inner ring (6) mounted on the first shaft (2) and an outer ring (7) contained within a housing (10) itself mounted on the second shaft (3), and a locking nut (12) securing the inner ring (6) on the shaft (2), this nut (12) having on its inner face an annular recess (16) supplied with oil under centrifugal action derived from an inlet (17) located on the second shaft (3), in which from the recess (16) of the nut (12) the oil is distributed on the one hand onto the inner track (8) of the roller assembly (4) to the rollers (5) in order to ensure lubrication and the cooling of the roller assembly and on the other hand to the outer ring (7), in which a radial clearance (18) provided between the outer ring (7) and the housing of the roller assembly (10) constitutes a space (19) where a film of oil under pressure is introduced in order to ensure the damping of vibrations produced in the second shaft (3) and in which the whole of the oil supplied is returned for recycling through the exterior of the housing of the roller assembly (10), characterised in this that :
— the recess (16) of the nut (12) constitutes a first enclosure which comprises means ensuring the precise distribution of the oil flows supplied on the one hand to the inner ring and on the other hand to the outer ring,
— the housing (10) of the outer ring (7) comprises an annular collector (21) which constitutes a second enclosure rotatably driven by the second shaft (3) and receiving oil centrifuged from the recess (16) of the nut (12) constituting the first enclosure rotatably driven at a different speed by the first shaft (2), the said collector (21) supplying with oil under pressure the film formed in the space (10) provided between the outer ring (7) and the housing (10) and having a predetermined radial height so as to produce satisfactory oil pressure and oil flow in the film,
— the said return of the oil being effected, at each end of the roller assembly housing (10), through an upstream circuit (42) and a downstream circuit (44) comprising internal means for ensuring balancing of the flows and of the pressures of the oil in the one and the other circuit, so as to maintain correct centering of the roller assembly,
— the shafts (2) and (3) comprising centering means intended during the mounting of the roller assembly (4) to guide the shafts (2) and (3) the one in the other without the radial clearance (18) provided between the outer ring (7) and the housing (10) leading to damaging contact between the shafts.

2. Inter-shaft bearing for a multi-spool turbomachine according to claim 1, characterised in this that the means for precise distribution of the oil flows dispensed from the recess (16) of the nut (12) are constituted by small partitioning ridges (28) so disposed as to sub-divide this recess (16) of the nut (12) into two series of sectors (29, 31), the first series of sectors (29) comprising radial holes (30) by which the oil supply is distributed by centrifugal action to the annular collector (21) of the housing of the roller assembly (10), the second series of sectors (31) comprising axial holes (32) by which the oil is distributed through longitudinal grooves (36) and radial apertures (37) of the inner ring (6) on to the inner race (8) of the roller assembly (4), the said radial holes (30) and axial holes (32) of the nut (12) being calibrated so as to adjust with precision this flow distribution.

3. Inter-shaft bearing of a multi-spool turbomachine according to any one of claims 1 and 2 characterised in this that the annular collector (21) of the housing (10) of the outer ring (7) of the roller assembly (4) comprises small ribs (27) which are disposed on one lateral face (24) of the collector (21) so as to stabilize the oil ring within the collector and to control the flow of the oil film formed between the ring (7) and the housing (10) and in this that the housing (10) comprises a predetermined number of calibrated longitudinal apertures (25) through which the oil is distributed from the collector (21), so as to adjust with precision the oil pressure in the film.

4. Inter-shaft bearing of a multi-spool turbomachine according to any one of claims 1, 2 and 3 characterised in this that internal means ensuring the balance of flows and of pressures of oil between the upstream and the downstream circuit for return from the one and the other part of the ring (7) are constituted by a flexible seal (46) placed between the ring (7) and the housing (10) and the entry to the upstream circuit so as to produce an oil reservoir and to give rise from the upstream side to pressure losses equivalent to those which are caused on the downstream side by a step (50) in order to avoid unbalance of the axial loads on the ring (7) and to maintain correct centering of the roller assembly (4).

5. Inter-shaft bearing of a multi spool turbomachine according to any one of the claims 1 to 4 characterised in this that the centering means of the shafts (2) and (3) are constituted by grooves cut in an extension (58) of the low pressure journal (3) and grooves machined in a corresponding zone (59) of the high-pressure journal (2).

**Ansprüche**

1. Ölfilmgedämpfte Wellenlagerung einer mehrrotorigen Turbomaschine, bei der eine durch den Lagerzapfen des Wellenstrangs des Hochdruckrotors gebildete erste Welle (2) gegenüber einer durch den Lagerzapfen des Wellenstrangs des Niederdruckrotors gebildeten zweiten Welle (3) drehbar angeordnet ist, mit einem Rollenlager (4, 5), das zwischen einem auf der ersten Welle (2) angeordneten Innenring (6) und einem Außenring (7) eingesetzt ist, der sich in einem Gehäuse (10) befindet, das seinerseits an der zweiten Welle (3) angebracht ist, sowie mit einer den Innenring (6) auf der Welle (2) haltenden Klemmutter (12), die an ihrer Innenseite eine ringförmige Ausnehmung (16) aufweist, die von einer Zuführung (17) in der zweiten Welle (3) her durch Zentrifugalwirkung mit Öl versorgt wird, wobei das Öl von der Ausnehmung (16) in der Mutter (12) ausgehend einerseits auf die Innenspur (8) des Wälzlagers (4) in Richtung auf die Rollen (5) geleitet wird, um die Schmierung und die Kühlung des Wälzlagers zu gewährleisten, und andererseits zu dem Außenring (7), an dem ein Radialspiel (18) zwischen Außenring (7) und Wälzlagergehäuse (10) einen Zwischenraum (19) entstehen läßt, in den ein Drucköfilm eingeführt wird, um die Schwingungen zu dämpfen, die an der zweiten Welle (3) hervorgerufen werden, und wobei die Gesamtmenge des zugeleiteten Öls außerhalb des Wälzlagergehäuses (10) zur Wiederverwendung zurückfließt, dadurch gekennzeichnet, daß

— die Ausnehmung (16) der Mutter (12) eine erste Umschließung bildet, die mit einer Einrichtung versehen ist, die die genaue Aufteilung der zugeleiteten Ölmengen einerseits auf den Innenring und andererseits auf den Außenring gewährleistet,

— das Gehäuse (10) des Außenringes (7) einen ringförmigen Sammler (21) aufweist, der eine zweite Umschließung bildet, die von der zweiten Welle (3) in Drehung versetzt wird und das Öl auffängt, das von der die erste Umschließung bildenden Ausnehmung (16) der Mutter (12) weggeschleudert wird, die von der ersten Welle (2) mit abweichender Drehzahl in Drehung versetzt wird, wobei der Sammler (21) den Film mit Drucköl versorgt, der in dem Zwischenraum (19) zwischen dem Außenring (7) und dem Gehäuse (10) gebildet ist und eine radiale Dicke besitzt, die so festgelegt ist, daß Öldruck und Ölmenge des Ölfilms ausreichend sind,

— der Rückfluß des Öls an jedem Ende des Wälzlagergehäuses (10) in einem Stromaufkreis (42) und einem Stromabkreis (44) erfolgt, wobei eine Einrichtung vorgesehen ist, die den Mengen- und den Druckausgleich in den beiden Kreisläufen herbeiführt, damit eine genaue Zentrierung des Wälzlagers aufrechterhalten wird,

— die Wellen (2) und (3) mit einer Zentriereinrichtung versehen sind, die bei dem Zusammensetzen des Wälzlagers (4) dafür sorgt, daß die Wellen (2) und (3) ineinandergefügt werden, ohne daß das zwischen dem Außenring (7) und dem Gehäuse (10) verbleibende Radialspiel (18) zu einer schädlichen gegenseitigen Berührung der Wellen führt.

2. Wellenlagerung nach Anspruch 1, dadurch gekennzeichnet, daß die Einrichtung zur genauen Aufteilung der aus der Ausnehmung (16) in der Mutter (12) zugeteilten Ölmengen durch unterteilende Leitflächen (28) gebildet wird, die so angeordnet sind, daß die Ausnehmung (16) der Mutter (12) in zwei Serien von Abschnitten (29, 31) unterteilt wird, daß die erste Serie (29) Radialbohrungen (30) aufweist, durch die das Öl verteilt wird, das durch Zentrifugalwirkung in den ringförmigen Sammler (21) des Wälzlagergehäuses gelangt, während die zweite Serie von Sektoren (31) mit Axialbohrungen (32) versehen ist, durch die hindurch das Öl über Längsrinnen (36) und über Radialbohrungen (37) des Innenringes (6) auf die Innenspur (8) des Wälzlagers (4) geleitet wird, und daß die Radialbohrungen (30) und Axialbohrungen (32) der Mutter (12) kalibriert sind, so daß die Aufteilung der Ölmengen mit großer Genauigkeit vorgenommen werden kann.

3. Wellenlagerung nach Anspruch 1 oder 2, dadurch gekennzeichnet, daß der ringförmige Sammler (21) an dem Gehäuse (10) des Außenringes (7) des Wälzlagers (4) mit Leitflächen (27) ausgestattet ist, die auf einer Seitenfläche (24) des Sammlers (21) in der Weise angeordnet sind, daß der Ölring im Inneren des Sammlers stabilisiert wird und die Versorgung des Ölfilms zwischen dem Ring (7) und dem Gehäuse (10) vergleichmäßigt wird, und daß das Gehäuse (10) eine vorbestimmte Zahl von kalibrierten Längsbohrungen (25) aufweist, durch die hindurch das Öl aus dem Sammler (21) verteilt wird, so daß der Öldruck in d⸱ ⸱ Ölfilm genau abgestimmt werden kann.

4. Wellenlagerung nach einem der Ansprüche 1 bis 3, dadurch gekennzeichnet, daß als innenliegendes Element zum Ausgleichen der Ölmengen und der Öldrücke zwischen dem Stromaufkreis und dem zurücklaufenden Stromabkreis beiderseits des Ringes (7) eine elastische Dichtung (46) vorgesehen ist, die zwischen dem Ringe (7) und dem Gehäuse (10) am Eingang des Stromaufkreises so angeordnet ist, daß ein Ölvorrat angesammelt wird und auf der stromauf gelegenen Seite Druckverluste erzeugt werden, die denen gleichwertig sind, die auf der stromab gelegenen Seite durch eine Stufe (50) hervorgerufen werden, damit eine ungleichförmige Verteilung der Axialbelastungen an dem Ring (7) vermieden und die einwandfreie Zentrierung des Wälzlagers (4) aufrechterhalten wird.

5. Wellenlagerung nach einem der Ansprüche 1 bis 4, dadurch gekennzeichnet, daß die Zentriereinrichtung für die Wellen (2) und (3) durch in einen Abweiskörper (58) des Hochdrucklagerzapfens (3) und in einen zugeordneten Bereich (59) des Niederdrucklagerzapfens (2) geschnittene Rillen gebildet wird.

FIG. 1